# DEMANDE DE BREVET EUROPEEN

(11) **EP 0 770 568 A1**
(43) Date de publication de la demande: **02.05.1997**
(21) Numéro de dépôt: 96402075.4
(22) Date de dépôt: 27.09.1996
(51) Int. Cl.: B65G 51/02, B65G 53/28, B65G 51/14

(54) **Procédé et dispositif d'entraînement par air de produits tels que bouteilles vides**

(30) Priorité: 29.09.1995 FR 9511526
(71) Demandeur: Merceron M.G.D. M.C.C.R., 86100 Chatellerault (FR)
(72) Inventeur: Merceron, Jean-Jacques, 86220 Veau sur Vienne (FR)
(74) Mandataire: Derambure, Christian

(57) **Abrégé**

L'invention concerne l'entraînement par air dans un conduit (3), de produit (2) tels que bouteilles vides en matière synthétique, et est caractérisée en ce qu'on aspire l'air extérieur par une entrée amont du conduit (3), relativement à un sens d'entraînement des produits (2), via une ouverture latérale d'aspiration (22) du conduit (3) située vers sa sortie aval, et on refoule de l'air pris à l'entrée amont, via une ouverture latérale de refoulement (23), dans la zone de l'ouverture aval.

## Description

L'invention concerne un procédé et un dispositif d'entraînement par air, de produits tels que bouteilles vides.

On connait déjà des dispositifs qui permettent de déplacer un produit à travers un conduit sous l'effet d'un flux d'air sensiblement tagentiel à la direction longitudinale de ce conduit, soit par aspiration, soit par refoulement.

Par exemple, des dispositifs à aspiration sont employés pour le ramassage de déchets légers et de volume réduit, tels que papiers ou cigarettes, sur la voie publique.

Ces dispositifs ne sont pas aptes à déplacer des produits légers mais de volume plus important. Cela est notamment dû au faible effet moteur provoqué par l'aspiration tangentielle.

Il est aussi fréquent que les produits se trouvent d'abord bloqués, puis s'accumulent à l'intérieur du conduit, sous l'effet du flux d'air qui les retient devant les ouïes d'aspiration, et finissent par obstruer ce dernier et empêcher le fonctionnement du dispositif.

On connnait aussi des dispositifs à aspiration prévus pour permettre le transfert de produits légers de volume plus important que les déchets évoqués plus haut.

Ces dispositifs comprennent une turbine de diamètre considérable, qui créé une aspiration tangentielle de forte puissance dans le conduit de passage des produits à transfèrer.

Outre les problèmes d'obstruction comparables à ceux déjà mentionnés, ces dispositifs ont pour inconvénient d'altèrer voire de désagrèger les produits transfèrés, du fait des chocs violents qu'ils subissent lors de leur passage dans le conduit d'aspiration.

A cause de leur turbine, les dispositifs de ce type sont excessivement volumineux, consommateurs en énergie et bruyants.

L'invention a pour but entre autre de résoudre les problèmes évoqués ci-dessus.

Elle vise notamment à permettre le transfert de produits légers et relativement volumineux, de façon rapide, économique et peu bruyante et sans risque de détérioration ou d'obstruction.

A cet effet, elle a pour premier objet un procédé d'entraînement par air dans un conduit, de produits tels que bouteilles vides en matière synthétique, caractérisé en ce qu'on aspire l'air extérieur par une entrée amont du conduit, relativement à un sens d'entraînement des produits, via une ouverture latérale d'aspiration du conduit située vers sa sortie aval, et on refoule de l'air pris à l'entrée amont, via une ouverture latèrale de refoulement, dans la zone de la sortie aval.

On obtient ainsi une combinaison d'aspiration et de refoulement, qui provoque dans un premier temps l'entrée des produits dans le conduit ainsi que leur déplacement le long de ce dernier, jusqu'à une zone où sont ménagées les ouvertures latérales d'aspiration et de refoulement d'air.

Les produits pénètrent sous l'effet de l'aspiration dans la zone des ouvertures latérales, soumis à un effet suffisant pour les amener en prise avec le flux d'air de refoulement, qui les entraîne à la sortie du conduit.

Dans ladite zone, le flux latéral de l'ouverture d'aspiration, proche de celui de l'ouverture de refoulement, permet d'obtenir un flux d'entraînement turbulent, qui empêche tout blocage des produits.

L'invention découle donc d'une approche différente de celles suivies conventionnellement, qui prévoient de provoquer un flux le plus tangentiel que possible et d'adapter la puissance de ce flux en fonction de la masse des produits à transfèrer.

A l'inverse, l'invention recourt à un flux combiné, notamment dans la zone "motrice" des ouvertures latérales, où il est orienté vers la sortie du conduit mais turbulent, à la façon d'un tourbillon.

Cela permet également de limiter la puissance nécessaire, en comparaison avec les techniques connues.

Selon une caractéristique, l'aspiration et le refoulement d'air par les ouvertures latérales sont provoqués, au moins en partie, à une section commune du conduit.

Selon une autre caractéristique, le refoulement d'air par l'ouverture latérale est, au moins en partie, provoqué à une section du conduit en amont de l'ouverture latérale l'aspiration.

Selon encore une autre caractéristique, le refoulement d'air par l'ouverture latérale est, au moins en partie, provoqué à une section du conduit en aval de l'ouverture latérale d'aspiration.

Une caractéristique prévoit que l'aspiration et/ou le refoulement d'air par les ouvertures latérales sont provoqués, au moins en partie, de manière sensiblement répartie, voire uniforme, périphériquement dans le conduit.

Une autre caractéristique prévoit que l'aspiration et/ou le refoulement d'air par les ouvertures latérales sont provoqués, au moins en partie, à une section de passage rétréci du conduit.

Dans un mode de réalisation, l'aspiration d'air à l'entrée amont du conduit est au moins en partie effectuée de manière périphérique et éventuellement sensiblement en aval d'une bouche de l'entrée amont d'admission des produits.

Selon une caractéristique, le flux d'air débité par l'ouverture latérale de refoulement est au moins en partie issu de l'ouverture latérale d'aspiration.

Une caractéristique prévoit alors que le flux d'aspiration et le flux de refoulement d'air par les ouvertures latérales sont provoqués, au moins en partie, par des moyens d'entraînement disposés entre les ouvertures latérales d'aspiration et de refoulement du conduit.

Dans un exemple, le flux d'air de refoulement est tangentiel, relativement au sens d'entraînement des produits, au moins à l'ouverture latérale de refoulement.

Un deuxième objet de l'invention est un dispositif d'entraînement par air dans un conduit, de produits tels que bouteilles vides en matière synthétique, pour la mise en oeuvre du procédé mentionné précédemment, dans lequel des moyens d'entraînement communs, par exemple un rotor à pales radiales ou analogues, sont agencés entre une ouverture d'aspiration et une ouverture de refoulement du conduit, de manière à provoquer, au moins en partie, à la fois l'aspiration et le refoulement.

Ce dispositif comporte selon une caractéristique, des moyens de guidage des produits suivant la direction d'entraînement, en saillie radialement à l'intérieur du conduit, en regard d'au moins une ouverture latérale d'aspiration et/ou de refoulement.

Par exemple, les moyens de guidage comportent une rampe étendue en amont en aval d'une ouverture latérale, et pourvue d'un tronçon divergent depuis l'extérieur vers l'intérieur du conduit suivant le sens d'entraînement, au droit ou au moins partiellement en amont de l'ouverture latérale.

Suivant un mode de réalisation, le dispositif comprend, en regard d'au moins une ouverture latérale d'aspiration et/ou de refoulement, un déflecteur de répartition du flux d'air pris par ou issu de cette ouverture.

Un mode de réalisation dans lequel l'ouverture latérale d'aspiration comporte au moins deux lumières distinctes, par exemple diamétralement opposées, le disposifif comprend à la périphérie du conduit, une chambre externe formant collecteur d'air, débouchant d'une part aux ouvertures latérales d'aspiration, tandis que d'autre part elle débouche aux moyens d'entraînement communs.

Cette chambre est, selon une caractéristique, à section évasée suivant le sens de circulation de l'air dans celle-ci, par exemple en forme d'escargot.

On prévoit dans un exemple, qu'une cloison de répartition est montée dans la chambre, par exemple de manière réglable en position, afin de répartir à l'admission des moyens d'entraînement, le flux d'air des différentes ouvertures latérales d'aspiration.

Dans un mode de réalisation, le conduit comporte un tronçon flexible, tel que tube à soufflets, à l'extrémité libre duquel est agencée une bouche de l'entrée amont, ce tronçon comprenant éventuellement des moyens de maniement.

Selon une caractéristique, le conduit comprend un tube monté sur un chassis, de manière que sa direction longitudinale soit orientée suivant un angle de l'ordre de 30° à 45°, par rapport à un plan sur lequel repose le chassis.

Une caractéristique prévoit que le dispositif est monté sur un chassis transportable, par exemple muni de roues.

Le chassis comporte, selon un exemple, des moyens d'ancrage à un système externe, tel qu'un véhicule automobile.

Selon une caractéristique, le dispositif comprend un groupe moteur apte à produire une puissance motrice, ce groupe étant alimenté en énergie de manière autonome, telle qu'un moteur à combustion interne, et/ou alimenté à une source externe d'énergie, par exemple dans le cas d'un moteur électrique.

L'invention est maintenant décrite en détail, et en se reportant aux dessins annexés.

La figure 1 est une vue en perspective d'un dispositif d'entrainement par air de produits, selon un mode de réalisation de l'invention.

La figure 2 est une vue schématique en perspective suivant la flèche II de la figure 1, qui illustre un agencement intérieur d'un conduit d'entraînement, vu depuis sa sortie aval.

La figure 3 est une vue schématique partielle en perspective d'un détail désigné par la flèche III de la figure 1, du dispositif avec un capot démonté.

La figure 4 est une vue partielle en perspective d'une entrée amont d'un conduit à tronçon flexible, selon l'invention.

Et la figure 5 est une vue partielle en coupe d'élévation suivant le plan IV-IV de la figure 2, qui illustre un exemple de répartition des ouvertures latérales à l'intérieur du conduit.

Sur les figures, on voit un dispositif 1 d'entraînement par air dans un conduit, de produit 2.

Le terme produit 2 désigne par exemple une bouteille en matière synthétique telle que PE, PEHT, PVC ou analogues.

Mais l'invention s'applique à d'autres objets légers et de volume maximal relativement important, de diverses origines comme les déchets, des produits industriels ou agricoles.

Similairement, l'utilisation qui est faite du dispositif 1 n'est pas limitée aux exemples décrits sur les figures.

Ainsi, l'invention peut être appliquée dans des domaines variés, comme les chaînes de transfert dans le cadre de processus industriels, les travaux agricoles, les loisirs notamment sportifs, et par exemple pour le déplacement d'objets tels que des balles.

L'exemple de réalisation vise ici un dispositif 1 destiné à l'industrie du recyclage et de la revalorisation des déchets.

Dans ce domaine, des dispositifs à aspiration évoqués précédemment, notamment prévus pour transférer depuis un premier emplacement vers un autre des bouteilles en matière plastique, provoquaient un déplacement trop brutal. Cela provoquait des désagrégations des bouteilles.

Or, dans la chaîne de revalorisation, les déchets d'un même type, mais de matières différentes, sont traités ensemble à certaines phases.

Par exemple, avant d'être fondus et recyclés, les récipients en matière synthétique subissent des traitements tels que lavage, enlèvement des étiquettes. Ensuite, les récipients sont triés par type de matériau identique. Ce n'est qu'alors qu'ils peuvent être par exemple broyés et/ou fondus pour leur recyclage.

On comprend qu'à plusieurs étapes de cette chaîne, des transferts de produits à recycler doivent être effectués, à un débit horaire le plus élevé possible.

Mais aussi, que si des produits fabriqués dans des matières différentes se désagrègent lors de ce transfert, les matériaux se mélangent ce qui rend impossible leur traitement et leur recyclage ultérieur.

Il existe donc une forte demande pour un dispositif de transfert qui puisse être utilisé à différentes étapes de chaînes telles que celle du recyclage des récipients synthétiques. Le transfert devant être effectué à débit élévé mais sans altération majeure des produits.

Le dispositif 1 décrit maintenant répond à ce cahier des charges notamment.

Ce dispositif 1 comprend un conduit 3, étendu suivant une direction longitudinale A.

La direction longitudinale A définit également une direction d'entraînement, suivant laquelle, le conduit 3 comporte une entrée amont 4 et une sortie aval 5.

Les termes d'amont et d'aval sont définis, le long de la direction d'entraînement A, en fonction d'un sens d'entraînement B, suivant lequel sont déplacés les produits 2, d'une manière générale.

Notons que lors de leur déplacement suivant le sens d'entraînement B, les produits 2 subissent des déplacements suivant d'autres directions que la direction A, de sorte que cette dernière désigne plus précisément la direction du transfert que les produits 2 doivent subir, plutôt que leur trajet véritable à l'intérieur du dispositif 1.

Egalement par rapport à la direction longitudinale A, les termes "radial" et "latéral" se définissent comme suit.

Le terme "latéral" désigne une orientation sensiblement parallèle à la direction d'entraînement A, mais à distance de l'axe central du conduit 3, qui représente sur les figures cette direction.

Le terme "radial" se rapporte à une orientation suivant une direction perpendiculaire à la direction A.

Le conduit 3 comprend un tube rigide 6, généralement cylindrique, et par exemple en aluminium. Le tube 6 est monté sur un chassis 7, par exemple réalisé à partir de poutres profilées métalliques.

Dans l'exemple des figures, le chassis 7 est transportable, notamment du fait qu'il est munis de roue 8.

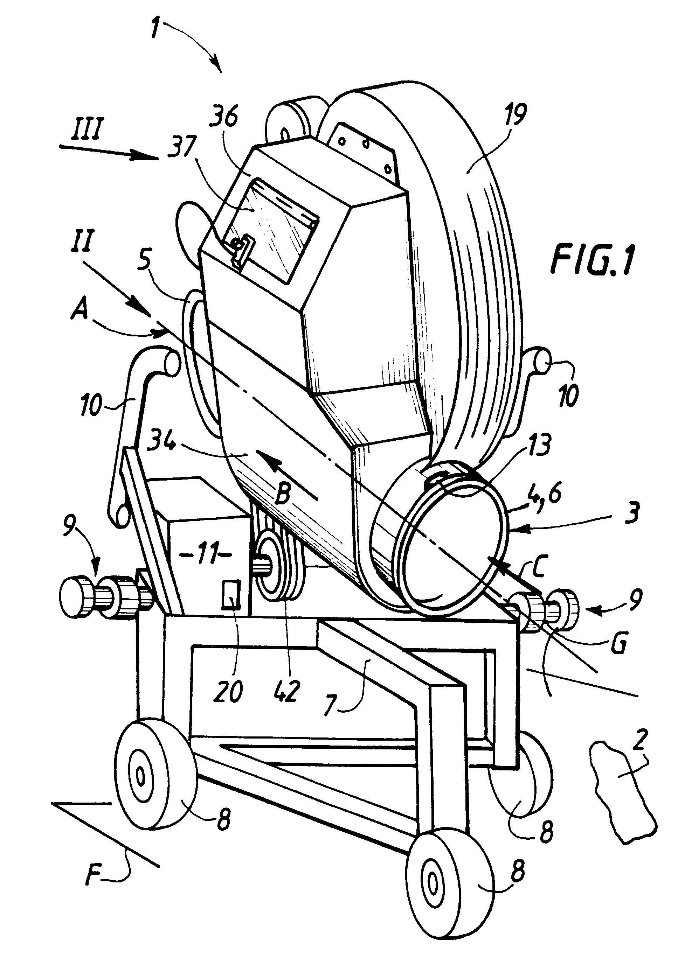

On remarque sur la figure 1 que le chassis 7 est également pourvu de moyens d'ancrage 9. Ici, les moyens d'ancrage 9 sont destinés à permettre l'accrochage, le transport et le soulèvement du dispositif 1, par un véhicule automobile ( non représenté) tel qu'un camion de ramassage de déchets.

On donne ici aux moyens d'ancrage 9 une forme et des dimensions similaires à des moyens d'ancrage de conteneurs de collecte d'un système de ramassage auquel est destiné le dispositif 1.

Ainsi, le dispositif 1 peut être placé à l'arrière du camion de collecte, de sorte que les produits 2 peuvent être transférés depuis un espace (bac, benne, etc.) en regard duquel on dispose l'amont 4.

En faisant fonctionner le dispositif 1, la sortie aval 5 étant en regard de l'ouverture de la benne du camion de collecte, les produits 2 peuvent être directement transférés dans cette benne du camion, où ils sont compactés sans être brisés.

Sur la figure 1, la référence numérique 10 désigne des butoirs montés sur le chassis 7, qui permettent d'une part la manipulation du dispositif 1, par exemple sont transport sur les roues 8.

D'autre part, les butoirs 10 font office de butée et de positionnement du dispositif 1 par rapport à une structure à laquelle il est ancré à l'aide des moyens 9.

Bien que cela ne soit pas illustré, le dispositif 1 peut comporter des moyens de connextion à l'extérieur, tels que cordons électriques ou analogue, grâce auxquels un groupe moteur 11 monté sur le chassis 7, est alimenté via une source d'énergie extérieure à ce dispositif.

Dans l'exemple de la figure 1, le groupe moteur 11 est un moteur à combustion interne, et plus précisément un moteur diesel, et donc alimenté en énergie de manière autonome.

On reviendra sur la fonction du groupe moteur 11.

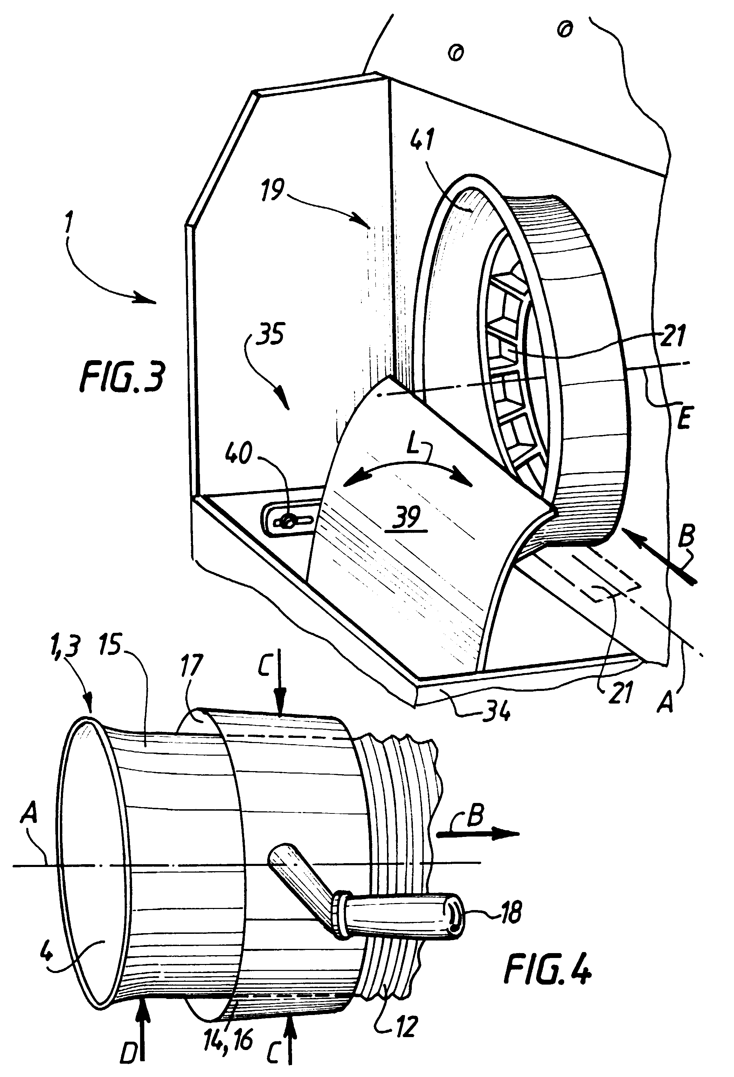

Pour revenir à la structure du conduit 3, sur la figure 4 il comprend un tronçon flexible 12 constitué par un tube à soufflets armés. Le tronçon flexible 12 prévu pour être raccordé à l'extrémité longitudinale du conduit 3 opposée à la sortie aval 5.

Alors, il fait office d'entrée amont 4, à la place de l'extrèmité du tube 6 qui est désignée par la même référence sur la figure 1.

L'assemblage du tronçon flexible 12 sur le tube 6 est ici obtenu par des attaches rapides 13 qui permettent une jonction sensiblement étanche.

A l'extrémité libre du tronçon flexible 12 qui forme l'entrée amont 4, est prévue une bouche 14.

La bouche 14 est raccordée au tube à soufflets 12 de manière sensiblement étanche, à proximité de leur périphérie externe respective.

La bouche 14 est de forme généralement cylindrique étendue suivant la direction A, et est pourvue d'une jupe cylindrique interne 15, disposée de manière concentrique.

Par rapport à un corps externe 16 de la bouche 14 auquel est ancré périphériquement le tube à soufflets flexible 12, la jupe cylindrique 15 est disposée intérieurement à distance, de manière à ménager un espace 17 périphérique.

Suivant la direction A et dans le sens B d'entrainement, la jupe 15 et le corps externe 16 sont étendus sensiblement sur la même distance, c'est-à-dire jusqu'au tube 12.

Dans le sens inverse au sens d'entrainement B, la jupe 15 est étendue en saillie du corps externe 16, et donc de l'espace 17 qui à pour fonction d'être une prise d'air.

La fonction de la jupe 15 est ainsi d'amener à distance suivant la direction A, l'entrée amont 4 du conduit 3, par laquelle les produits 2 pénètrent dans le dispositif 1.

Donc, un flux d'air peut pénétrer dans le dispositif 1 non seulement par l'entrée amont 4 permettant le passage des produits 2, mais également par l'espace 17. Ainsi, même si l'entrée amont 4 est obturée, une alimentation en air du disposif 1 est toujours possible, par l'espace 17 de la bouche 14.

Une poignée 18 (figure 4) est fixée sur le corps externe 16 de la bouche 14, ce qui permet la prise en main et la manipulation de l'entrée amont 4 par un opérateur.

Cela permet à l'opérateur d'amener l'entrée amont 4, qui est déplaçable librement du fait de l'interposition du tronçon flexible 12 (qui a une longueur de plusieurs mètres par exemple), en regard de produits 2 qui doivent être transférés. D'autres formes de moyens de maniement 18 que la poignée illustrée sur la figure 4 peuvent être prévus.

Dans l'exemple illustré, le diamètre intérieur C du corps externe 16 est de l'ordre de 400 mm, et correspond sensiblement à ceux du tronçon flexible 12 ainsi que du tube rigide 6.

On a désigné en D sur les figures 4 et 5, des diamètres intérieurs de l'ordre de 330 mm dans ces exemples. Sur la figure 5, le diamètre D est la dimension radiale de la jupe cylindrique interne 15. Tandis que sur la figure 5, le diamètre D est la dimension radiale dans le tube 6, d'un passage restreint qui sera évoqué.

Sur les figures 1, 3 et 5, la référence numérique 19 désigne des moyens d'entrainement, c'est-à-dire un agencement qui permet de générer à l'intérieur du dispositif 1, un flux d'air d'une puissance et d'une direction générale (A) appropriée.

Cette puissance est déterminée en fonction de la masse et du volume des produits 2 à transférer à l'aide du dispositif 1.

Sur la figure 1, un variateur 20 agit sur le groupe moteur 11, qui lui-même est agencé pour fournir aux moyens d'entrainement 19 la puissance motrice nécéssaire. Le variateur 20, qui peut être un potentiomètre ou une manette de carburation, permet d'ajuster la puissance motrice fournie par le groupe 11, et en conséquence la puissance du flux d'air généré par les moyens d'entraînement 19.

Dans l'exemple des figures 3 et 5, les moyens 19 comprennent une turbine à pales radiales 21, disposée sensiblement au droit du conduit H et plus précisément au droit de l'axe central du tube rigide 6. L'axe de rotation de la turbine 21 est sensiblement perpendiculaire à la direction A, et parallèle à un plan F (figure 1) ici horizontal, sur lequel repose le dispositif 1 par l'intermédiaire du chassis 7.

Dans les exemples, l'axe E est sensiblement horizontal, et la direction A est orientée par rapport au plan F qui sert ici de référence pour la description du dispositif 1, d'un angle G de 30 à 45°, l'angle G étant tel que suivant le sens d'entraînement B, l'entrée amont 4 est plus proche du plan de référence F, tandis que la sortie aval 5 en est plus éloignée.

On souligne encore que la référence à un plan F horizontal n'est liée qu'à la clarté de la description, et que le dispositif 1 peut fonctionner avec une orientation quelconque de la direction A dans l'espace.

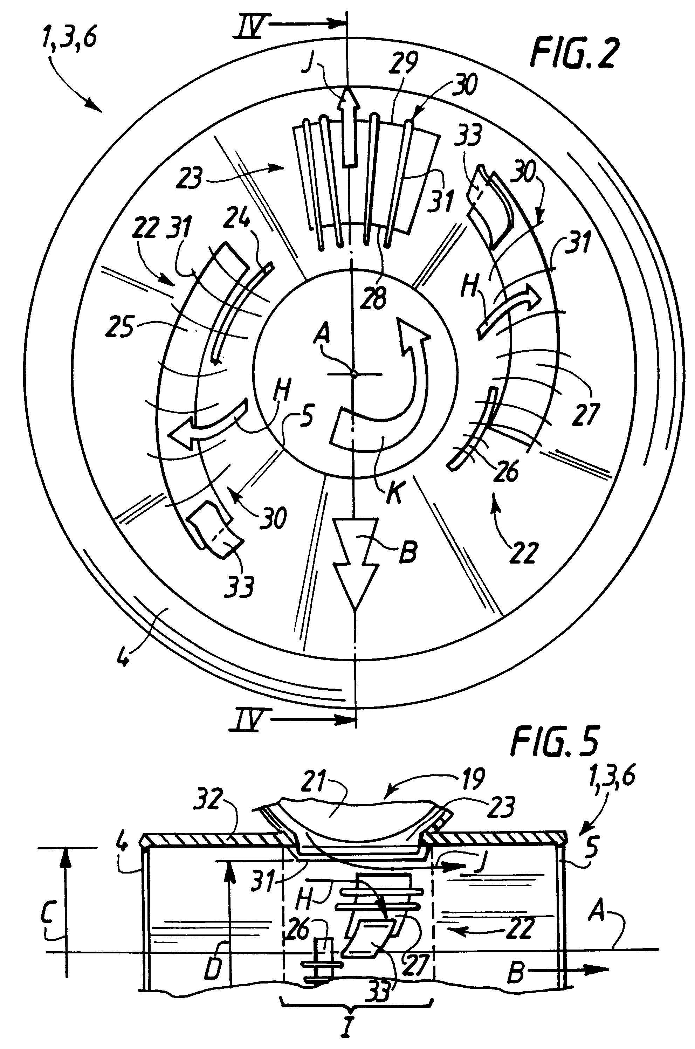

Sur les figures 2 et 5, on voit qu'à l'intérieur du tube rigide 6 et donc du conduit 3, sont ménagées des ouvertures latérales 22 dites "d'aspiration", ainsi que des ouvertures latérales 23 dites "de refoulement".

Le terme "ouverture" est employé au sens large, de sorte qu'une ouverture latérale 22 ou 23, peut comporter plusieurs lumières distinctes, débouchant à l'intérieur et à l'extérieur du tube rigide 6. Dans l'exemple illustré, l'ouverture 22 comporte quatre lumières tandis que l'ouverture 23 en comporte une seule.

Les ouvertures latérales 22 et 23 ont une fonction commune, qui est de gérer et d'entretenir un flux d'air dont au moins l'une des composantes de direction est, à l'intérieur du conduit 3, dirigée dans le sens d'entraînement B.

Dans les ouvertures 22, le flux d'air provient de l'entrée amont 4 et est évacué hors du conduit 3 par ces ouvertures. Ce flux d'air ést donc un flux d'aspiration.

A l'inverse, le flux d'air passant l'ouverture 23 est issu de cette dernière et fait donc office de refoulement vers la sortie aval 5.

Sur les figures 2 et 5, les flèches H illustrent le flux d'air d'aspiration dans les ouvertures latérales 22. Tandis que les flèches J représentent le flux d'air de refoulement issu de l'ouverture latérale 23.

Dans les exemples illustrés, le dispositif 1 comporte des moyens d'entraînement 19 communs, c'est-à-dire à même de générer à la fois les flux d'air d'aspiration H et de refoulement J.

Cependant, l'invention s'applique également à des dispositifs et procédés dans lesquels des moyens d'entraînement distincts générent d'une part le flux d'air de refoulement et d'autre part le flux d'air d'aspiration.

Par contre, une particularité de l'invention est qu'on inspire l'air extérieur par l'entrée amont 4 - avec des produits 2 -, via l'ouverture latérale d'aspiration 22 du conduit 3 qui est situé vers la sortie aval 5, et qu'on refoule de l'air pris à l'entrée amont 4, via l'ouverture latérale de refoulement 23, dans la zone de la sortie aval 5.

Cette combinaison particulière d'aspiration et de refoulement, est effectuée au moins en partie, à une section commune suivant la direction A du conduit, qui est désignée sur la figure 5 par la zone I. En effet, les ouvertures latérales d'aspiration 22 et de refoulement 23 débouchent à l'intérieur du conduit 3, dans cette même zone I.

Du fait de la combinaison des flux H et J dans la zone "motrice" I, on obtient un flux généralement orienté vers la sortie aval 5 qui n'est pas tangentiel comme dans l'état de la technique, mais qui est "turbulent" à la façon d'un tourbillon, comme cela ressort de la flèche K sur la figure 2.

Le flux combiné K est une trombe en hélice spiroïdale, centrée sur la direction A autour de l'axe du cube 6, et orientée dans le sens B.

On obtient un effet de trombe ou de "turbine dynamique", qui accroît l'effet moteur de l'air transportant les produits 2 donc qui permet d'obtenir un débit élévé de transfert de ces derniers.

En outre, l'effet de trombe du flux combiné K donne aux produits 2 une composante qui a tendance à les empêcher de pénétrer dans les ouvertures latérales d'aspiration 22, ou de se plaquer contre celle-ci en les obturant.

Egalement, le flux combiné K limite les chocs des produits 2 transférés contre la paroi intérieure du conduit 3, et donc évite que ceux-ci ne se déteriorent lors de leur transfert. Le flux K a donc un effet de centrage des produits 2.

Il ressort de la figure 5 que l'ouverture latérale de refoulement 23 est au moins en partie en amont, au sein de la zone motrice I, des ouvertures latérales d'aspiration 22.

Egalement, l'ouverture latérale de refoulement 23 est étendue en aval des ouvertures latérales d'aspiration 22, dans la zone motrice I.

On comprend qu'une aspiration des produits 2 à l'entrée amont 4 est obtenue par l'aspiration issue des ouvertures latérales 22, notamment. Dès que les produits 2 pénètrent dans la zone motrice I, ils viennent également en prise avec le flux J de refoulement, qui augmente la poussée que ces produits subissent.

Et du fait que, comme cela ressort de la figure 5, le flux de refoulement J est tangentiel à la direction A, à proximité de l'ouverture 23, les produits 2 ont leur composante de déplacement suivant le sens B augmentée par l'entrée en prise avec le flux de refoulement J.

Notons en se reportant à la figure H que du fait de l'espace 17 ménagé autour de la jupe 15, l'aspiration d'air à l'entrée amont 4 du conduit 3 est au moins en partie effectuée de manière périphérique et, dans l'exemple, sensiblement en aval de la section par laquelle les produits 2 pénètrent. Cela permet d'obtenir une sorte de "coussin d'air" participant au transfert des produits 2 tout en limitant que ceux-ci viennent heurter l'intérieur du conduit 3.

Les moyens d'entraînement 19 uniques, c'est-à-dire communs aux ouvertures latérales 22 et aux ouvertures latérales 23 font que le flux d'air débité par l'ouverture de refoulement 23 est issu de l'ouverture latérale d'aspiration 22. A l'intérieur du dispositif 1, cet agencement en boucle génère une synergie, qui augmente encore la force motrice appliquée aux produits 2.

Dans les exemples, les moyens d'entraînement communs 19 sont agencés entre les ouvertures d'aspiration 22 et l'ouverture de refoulement 23. La figure 2 montre que l'ouverture latérale d'aspiration 22 comporte suivant ce mode de réalisation, quatre lumières 24, 25, 26 et 27.

Les lumières d'aspiration 24 et 25 forment une paire qui est diamètralement opposée à une autre paire, comprenant les lumières d'aspiration 26 et 27.

Les lumières 24 et 26 sont en forme de secteur de cercle suivant un plan commun perpendiculaires à la direction A.

Les lumières 24 et 26 sont disposées en amont des lumières 25 et 27.

Ces dernières (25, 27) sont prévues en aval des lumières 24, 26 et étendues à la façon chacune d'un pas de vis opposé à l'autre, en hélice. Donc, les lumières d'aspiration 25 et 27 sont étendues suivant le sens d'entraînement B, à la fois suivant la direction A et suivant la périphérie de l'intérieur du conduit 3.

La figure 2 montre comment les lumières 24-27 de l'ouverture 22 sont réparties suivant la périphérie du conduit 3, de sorte que le flux d'aspiration est lui aussi réparti à l'intérieur de la zone motrice I, tant suivant la direction A que suivant la périphérie intérieure du conduit 3.

Les lumières 24 et 26 sont agencées pour amorcer l'aspiration intérieure, en évitant de par leur surface réduite par rapport aux lumières 25 et 27, ainsi qu'à l'ouverture 23, de dévier et donc de plaquer les produits 2 contre l'ouverture 22.

Quant à elles, les lumières 25 et 27 en hélice capturent la majeure partie du flux d'air d'aspiration qui est dirigé vers les moyens d'entraînement 19.

Dans les exemples, l'ouverture 23 comprend une lumière unique étendue parallèlement à la direction A, c'est-à-dire suivant une génératrice de l'intérieur du tube rigide 6 sur toute la longueur de la zone motrice I.

Sur la figure 5, on voit que la turbine à pales radiales 21 a sa périphérie externe étendue à fleur d' ouverture de refoulement 23, c'est-à-dire de manière sensiblement tangente à cette dernière.

En outre, des rebords d'extrémité 28 et 29 respectivement amont et aval, de l'ouverture 23 sont biseautés de façon que suivant une direction radiale, l'ouverture 23 s'évase vers l'extérieur du tube rigide 6.

Les bords biseautés amont 28 et aval 29 participent à rendre le flux d'air refoulé J, tangent à la direction A.

Sur la figure 2, l'aspiration H et le refoulement d'air J par les ouvertures latérales 22 et 23 sont provoqués au passage rétréci déjà évoqué plus haut.

Cette section de passage rétréci correspond sensiblement à la zone I.

Le rétrécissement de section dans la zone I amène le diamètre de passage des produits 2 du diamètre C au diamètre D.

Ce sont les moyens de guidage 30 qui rétrécissent la section de passage dans le tube rigide 6. Les moyens de guidage 30 sont destinés à orienter les produits 2 lors de leur passage dans la zone I, d'une part à distance des ouvertures latérales 22 et 23, et d'autre part pour les orienter suivant la direction d'entraînement A.

A cet effet, les moyens de guidage 30 sont en saillie radialement à l'intérieur du conduit 3, en regard des ouvertures latérales d'aspiration 22 et de refoulement 23.

Sur les figures, les moyens de guidage 30 sont constitués par une pluralité de rampes 31.

Chaque rampe 31 est étendue suivant la direction A généralement, en amont ainsi qu'en aval de chaque ouverture qu'elle protège.

Certaines rampes 31 sont placées en regard d'une seule ouverture. Tel est le cas des rampes 31 de l'ouverture de refoulement 23. D'autres rampes 31 enjambent deux lumières d'une même ouverture, comme c'est le cas pour les rampes 31 de protection des lumières 24, 25 et 26, 27 (figure 2 et 5).

Sur la figure 5, on voit que les rampes 31 qui sont généralement orientées suivant la direction A, à proximité de la périphérie interne du tube rigide 6, sont pourvues d'un tronçon divergent 32. Le tronçon divergent 32 de la rampe 31 est orienté suivant une direction radiale depuis l'extérieur vers l'intérieur du conduit 3, suivant le sens d'entraînement B.

Les tronçons divergents 32 ont une fonction de " tremplin", permettant de guider de manière douce les produits 2 qui viennent en contact avec les moyens de guidage 30, et de les rediriger vers le centre du tube rigide 6 sans leur faire subir de chocs trop importants.

Les moyens de guidage 30 sont prévus pour avoir une influence minime sur les flux (H, J, K) dans la zone motrice I.

Sur les figures 2 et 5, la référence numérique 33 désigne des déflecteurs, en regard d'ouvertures latérales d'aspiration 22. Ici, un déflecteur 33 est prévu à l'une des deux extrémités périphériques de chacune des lumières 25 et 27.

En section perpendiculairement à la direction A, chaque déflecteur 33 a la forme d'un "J". Une extrémité de fonte courbure du déflecteur 33 est fixée, par exemple, par soudage, à l'intérieur du tube rigide 6. Une partie sensiblement parallèle à l'intérieur du tube rigide 6 de ce déflecteur 33, est en saillie pour masquer partiellement l'une des lumières (25 ou 27). Suivant une direction radiale, le déflecteur 33 est à distance de la lumière (25, 27) qu'il masque partiellement.

La fonction des déflecteurs 33 est de répartir au sein d'une lumière d'aspiration (25 ou 27), la quantité d'air dirigée vers les moyens d'entraînement 19. Ainsi, la répartition de la prise d'air dans la section I est effectuée de manière répartie sur la périphérie de cette zone, et donc de manière sensiblement uniforme.

Cela aussi participe à l'obtention du flux turbillonnaire K, ainsi qu'à faire que celui-ci est le plus régulier que possible.

Sur les figures 1 et 3, la référence numérique 34 désigne une chambre, qui est ici en forme d'escargot.

La chambre 34 est à section évasée suivant le sens de circulation de l'air qui s'y déplace. La chambre 34 est agencée à la périphérie du conduit 3, et plus précisément du tube rigide 6, et forme un collecteur d'air reliant les différentes lumières de l'ouverture latérale 22.

D'une part, la chambre 34 débouche à l'intérieur du conduit 3, via les lumières 24-27, tandis que d'autre part elle débouche, comme on le voit sur la figure 3, aux moyens d'entraînement 19.

Suivant une section perpendiculaire à la direction A, la chambre 34 est étendue sur sensiblement trois-quart de la périphérie du tube rigide 6.

Dans l'exemple illustré, la chambre 34 est étendue depuis une partie faiblement étendue radialement en regard des lumières 24 et 25, extérieurement. Elle s'étend en s'évasant de manière à recouvrir extérieurement les lumières 26 et 27 et déboucher dans un tiroir 35, illustré sur la figure 3.

Le tiroir 35 est la partie de plus forte section radialement de la chambre 34. Le tiroir 35 est, au sein du dispositif 1, recouvert par un capot amovible 36 (figure 1). Ce capot 36 est retiré sur l'illustration de la figure 3.

Une fenêtre 37 d'accès à l'intérieur du tiroir 35 est montée par l'intermédiaire d'une charnière, sur le capot 36. Elle permet d'observer notamment la turbine rotor à pales 21 qui débouche dans le tiroir 35 par sa partie centrale. On peut ainsi constater l'état par exemple de propreté de la turbine et si nécessaire la nettoyer, via la fenêtre 37.

Un système de détection-verrouillage 38 coopère avec la fenêtre 37 pour empêcher son ouverture lorsque les moyens 19 sont en action. Le système 38 est donc un système de sécurité.

Sur la figure 3, on remarque une cloison 39 montée dans le tiroir 35 de la chambre 34, par l'intermédiaire de moyens de réglage et de maintien en position 40. Les moyens 40 comprennent une patte soudée à la cloison 39, et une vis, traversant un trou oblong de la patte, et serrée dans une paroi fixe (solidaire du chassis 7) du dispositif 1.

Comme indiqué par la flèche L sur la figure 3, le réglage à l'aide des moyens 40 permet de déplacer la cloison 39 suivant une direction sensiblement parallèle à l'axe E de rotation de la turbine 21.

Ainsi le flux d'air provenant des ouvertures latérales d'aspiration 22 peut être réparti sur la surface de la couronne 41 qui forme la prise d'air centrale de la turbine 21.

La cloison 39 oriente préférentiellement le flux d'air entre certaines des lumières de l'ouverture 22 et d'autres. En effet, quand la cloison 39 est proche de la couronne 41, le flux d'air (issu des lumières 24 et 25) passant entre cette cloison 39 et la couronne 41 est aspiré sur une surface réduite de cette dernière. Le reste de la surface de prise d'air de la couronne 41 est donc dédié au flux circulant entre la cloison 39 et le capot 36. Donc, la position de la cloison 39 répartit la puissance d'aspiration à l'intérieur du tube rigide 6.

On remarque que la transmission de force motrice entre le groupe 11 et les moyens 19 est effectuée ici par l'intermédiaire de poulies crantées et d'une courroie 42.

Du fait de la puissance limitée à un minimum du groupe 11, ainsi que de la transmission par courroie et du flux lissé à l'intérieur du conduit 3, le fonctionnement du dispositif 1 est plus silencieux que celui des dispositifs connus, qui pouvaient produire des nuisances sonores de l'ordre de 120 décibels.

Ce fonctionnement plus silencieux du dispositif 1, ainsi que son encombrement limité par rapport aux dispositifs connus, est également lié à l'obtention d'un d'un flux ou "escargot" statique et d'un flux dynamique qui permettent de limiter les dimensions et les résistances au fonctionnement des constituants du dispositif 1.

L'invention n'est pas limitée au mode de réalisation décrit et illustré mais comprend tous leurs équivalents.

## Revendications

1. Procédé d'entraînement par air dans un conduit (3), de produit (2) tels que bouteilles vides en matière synthétique, caractérisé en ce qu'on aspire l'air extérieur par une entrée amont (4) du conduit (3), relativement à un sens d'entraînement (B) des produit (2), via une ouverture latérale d'aspiration (22) du conduit (3) située vers sa sortie aval (5), et on refoule de l'air pris à l'entrée amont (4), via une ouverture latèrale de refoulement (23), dans la zone de la sortie aval (5).

2. Procédé selon la revendication 1, caractérisé en ce que l'aspiration et le refoulement d'air par les ouvertures latérales (22, 23) sont provoqués, au moins en partie, à une section (I) commune du conduit (3).

3. Procédé selon la revendication 1, caractérisé en ce que le refoulement d'air par l'ouverture latérale (23) est, au moins en partie, provoqué à une section du conduit (3) en amont de l'ouverture latérale (22) d'aspiration.

4. Procédé selon la revendication 1, caractérisé en ce que le refoulement d'air par l'ouverture latérale (23) est, au moins en partie, provoqué à une section du conduit (3) en aval de l'ouverture latérale d'aspiration (22).

5. Procédé selon la revendication 1, caractérisé en ce que l'aspiration et/ou le refoulement d'air par les ouvertures latérales (22, 23) sont provoqués, au moins en partie, de manière sensiblement répartie, voire uniforme, périphériquement dans le conduit (3).

6. Procédé selon la revendication 1, caractérisé en ce que l'aspiration et/ou le refoulement d'air par les ouvertures latérales (22, 23) sont provoqués, au moins en partie, à une section de passage rétréci du conduit (3).

7. Procédé selon la revendication 1, caractérisé en ce que l'aspiration d'air à l'entrée amont du conduit (3) est au moins en partie effectuée de manière périphérique et éventuellement sensiblement en aval d'une bouche (14) de l'entrée amont (4) d'admission des produit (2).

8. Procédé selon la revendication 1, caractérisé en ce que le flux d'air (J) débité par l'ouverture latérale de refoulement (23) est au moins en partie issu de l'ouverture latérale d'aspiration (22).

9. Procédé selon la revendication 8, caractérisé en ce que le flux (H) d'aspiration et le flux (J) de refoulement (23) d'air par les ouvertures latérales (22, 23) sont provoqués, au moins en partie, par des moyens d'entraînement (19) disposés entre les ouvertures latérales d'aspiration (22) et de refoulement (23) du conduit (3).

10. Procédé selon la revendication 1, caractérisé en ce que, au moins à l'ouverture latérale (23) de refoulement, le flux d'air (J) de refoulement est tangentiel, relativement au sens d'entraînement (B) des produits (2).

11. Dispositif (1) d'entraînement par air dans un conduit (3), de produit (2) tels que bouteilles vides en matière synthétique, pour la mise en oeuvre du procédé selon la revendication 1, caractérisé en ce que des moyens d'entraînement (19) communs, par exemple un rotor (21) à pales radiales ou analogues, sont agencés entre une ouverture d'aspiration (22) et une ouverture de refoulement (23) du conduit (3), de manière à provoquer, au moins en partie, à la fois l'aspiration et le refoulement.

12. Dispositif (1) selon la revendication 11, caractérisé en ce que des moyens de guidage (30) des produit (2) suivant la direction d'entraînement (A), saillent radialement à l'intérieur du conduit (3), en regard d'au moins une ouverture latérale d'aspiration (22) et/ou de refoulement (23).

13. Dispositif (1) selon la revendication 12, caractérisé en ce que les moyens de guidage (30) comportent une rampe (31) étendue en amont en aval d'une ouverture latérale (22, 23), et pourvue d'un tronçon divergent depuis l'extérieur vers l'intérieur du conduit (3) suivant le sens d'entraînement (B), au droit ou au moins partiellement en amont de l'ouverture latérale (22, 23).

14. Dispositif (1) selon la revendication 11, caractérisé en ce qu'il comprend, en regard d'au moins une ouverture latérale d'aspiration (22) et/ou de refoulement (23), un déflecteur (33) de répartition du flux d'air pris par ou issu de cette ouverture (22, 23).

15. Dispositif (1) selon la revendication 11, caractérisé en ce que lequel l'ouverture latérale d'aspiration (22) comporte au moins deux lumières (24, 25, 26, 27) distinctes, par exemple diamétralement opposées, le disposifif comprenant à la périphérie du conduit (3), une chambre (34) externe formant collecteur d'air, débouchant d'une part aux ouvertures latérales (22) d'aspiration, tandis que d'autre part elle débouche aux moyens d'entraînement (19) communs.

16. Dispositif (1) selon la revendication 15, caractérisé en ce que la chambre (34) est à section évasée suivant le sens de circulation de l'air dans celle-ci, par exemple en forme d'escargot.

17. Dispositif (1) selon la revendication 15, caractérisé en ce qu'une cloison (39) de répartition est montée dans la chambre (34), par exemple de manière réglable en position, afin de répartir à l'admission des moyens d'entraînement (19), le flux d'air des différentes ouvertures latérales d'aspiration (22).

18. Dispositif (1) selon la revendication 11, caractérisé en ce que le conduit (3) comporte un tronçon flexible (12), tel que tube à soufflets, à l'extrémité libre duquel est agencée une bouche (14) de l'entrée amont, ce tronçon (12) comprenant éventuellement des moyens de maniement (18).

19. Dispositif (1) selon la revendication 11, caractérisé en ce que le conduit (3) comprend un tube rigide (6) monté sur un chassis (7), de manière que sa direction longitudinale (A) soit orientée suivant un angle (G) de l'ordre de 30° à 45°, par rapport à un plan (F) sur lequel repose le chassis (7).

20. Dispositif (1) selon la revendication 11, caractérisé en ce qu'il est monté sur un chassis (7) transportable, par exemple muni de roues (8).

21. Dispositif (1) selon la revendication 20, caractérisé en ce que le chassis (7) comporte des moyens d'ancrage (9) à un système externe, tel qu'un véhicule automobile.

22. Dispositif (1) selon la revendication 11, caractérisé en ce qu'il (1) comprend un groupe moteur apte à produire une puissance motrice, ce groupe étant alimenté en énergie de manière autonome, telle qu'un moteur à combustion interne, et/ou alimenté à une source externe d'énergie, par exemple dans le cas d'un moteur électrique.
